# EUROPEAN PATENT APPLICATION

(11) **EP 4 804 337 A1**
(43) Date of publication of application: **09.09.2026**
(21) Application number: 25305314.4
(22) Date of filing: 07.03.2025
(51) Int. Cl.: H01R 4/2483, H01R 4/30, H01R 4/36

(54) **WIRE CONNECTION ASSEMBLY WITH A RETENTION RING OR CLIP**

(71) Applicant: TE Connectivity Solutions GmbH, 8200 Schaffhausen (CH)
(72) Inventor: PELTIER, Bruno, GEVREY-CHAMBERTIN (FR); MILLOT, Benoit, GEVREY-CHAMBERTIN (FR); CARLHIAN, Gilles, GEVREY-CHAMBERTIN (FR); DOSSMANN, Julien, GEVREY-CHAMBERTIN (FR); THOREL, Guillaume, GEVREY-CHAMBERTIN (FR)
(74) Representative: Grünecker Patent- und Rechtsanwälte PartG mbB

(57) **Abstract**

The present invention relates to a wire connection assembly (10), such as a splice connector or lug, in particular for connecting power cables or electrical cables. It comprises a connector body (12) at least partially forming a wire receiving chamber (24) and at least one threaded hole (34) for receiving a binding screw (100) and a threaded cylinder (36) adapted to engage the binding screw (100). The wire connection assembly (10) further comprises a retention ring (60, 600) or clip distinct from the threaded cylinder (36) and the binding screw (100). The retention ring (60, 600) or clip is engageable with the threaded cylinder (36) so as to allow the binding screw (100) to be screwed into the threaded cylinder (36) while blocking a translation of the threaded cylinder (36) in the at least one threaded hole of the connector body (12) until a predefined tightening torque of the binding screw (100) within the threaded cylinder (36).

## Description

### Field of Invention

The present invention relates to a wire connection assembly, such as a splice connector or a lug, especially for connecting power cables or electrical cables. Wire connection assemblies may be used for splicing or connecting e.g. stranded wires in power distribution networks or long distance transmission systems for distributing electrical power.

### Background of the invention

A typical wire connection assembly consists of a connector body that provides at least one receiving chamber into which a wire or its stranded end section can be inserted. A binding screw is then inserted into a threaded hole accessible from the exterior of the connector body. This threaded hole extends essentially perpendicular to the inserted wire. When the screw is tightened, it advances through the threaded hole into the receiving chamber, compressing the wire between the screw and the chamber walls. It allows securing the wire mechanically and establishing an electrical connection between the screw, the inner chamber walls, and the wire itself.

Due to the demands for weight and cost reduction, especially in power distribution systems, stranded aluminum wires are being increasingly used as a substitute for traditional copper wires.

The document EP 2 999 053 A1 discloses binding screws specifically adapted for aluminum wires. These screws comprise a conical tip that penetrates the wire without causing excessive damage while simultaneously breaking through the oxide layer that may formed when aluminium is exposed to air. However, the incorporation of a conical tip reduces the overall threaded engagement length of the screw, which can affect retention stability between the binding screw and the connector body. To compensate for this reduced threaded engagement, a threaded cylinder is used to retain the screw within the connector body. The screw is threaded into this intermediate threaded cylinder, which in turn is threaded into the threaded hole of the connector body.

During assembly, it is necessary to prevent the threaded cylinder from rotating while the screw is being inserted and until the screw reaches its stop. A known method involves applying a small adhesive point between the threaded cylinder and the connector body. This adhesive temporarily locks the threaded cylinder in place and breaks upon reaching a predefined torque, allowing the threaded cylinder and screw to be then tightened together within the connector body.

However, there is a need for a more reliable and consistent way to keep the threaded cylinder stable during assembly. It is desirable to simplify the installation of the wire connection assembly, in particular to improve efficiency and ease of use.

### Description of the Invention

The object of the invention is achieved by means of a wire connection assembly according to the independent claim 1. The wire connection assembly, such as a splice connector or lug, in particular for connecting power cables or electrical cables, the wire connection assembly comprising: a connector body at least partially forming a wire receiving chamber and comprising at least one threaded hole for receiving a binding screw, a threaded cylinder, the threaded cylinder having an outer threaded section adapted to engage the at least one threaded hole of the connector body and an inner threaded section adapted to engage the binding screw. The wire connection assembly further comprises a retention ring or clip distinct from the threaded cylinder and the binding screw. The retention ring or clip is engageable with the threaded cylinder so as to allow the binding screw to be screwed into the threaded cylinder while blocking a translation of the threaded cylinder in the at least one threaded hole of the connector body until a predefined tightening torque of the binding screw within the threaded cylinder. In particular, the retention ring or clip may block both a rotational and axial movement of the threaded cylinder with respect to the connector body.

An advancement of the threaded cylinder in the at least one threaded hole of the connector body may thus be blocked. Hence, the retention ring or clip advantageously maintains the threaded cylinder in position until a predefined tightening torque of the binding screw within the threaded cylinder without requiring glue. This provides a more reliable retention mechanism compared to applying a point of glue. Moreover, the retention ring or clip may serve as a visual indicator.

The retention ring or clip may be configured to at least partially rest on an outer surface of the connector body. The retention ring or clip may be preventing from translation between the outer surface of the connector body and the threaded cylinder.

The wire connection assembly is adapted for connecting cables, for instance power cables, electrical cables, or wires. The cables may be composed of stranded wires. The wire connection assembly may be adapted for flexible aluminum cables, such as those used in wind farms. The wire connection assembly may be adapted for cables with integrated water barriers, like strand-filled or water-block cables.

According to one embodiment, the threaded cylinder can comprise a detent, and the retention ring or clip can have an abutment surface adapted to abut against the detent of the threaded cylinder along a central longitudinal axis of the threaded cylinder. The detent on the threaded cylinder, in combination with the abutment surface of the retention ring or clip, limits the advancement, in particular the rotational advancement, of the threaded cylinder along its central longitudinal axis. This mechanical arrangement helps maintaining the positioning and stability of the threaded cylinder relative to the connector body, in particular during the screwing of the binding screw into the threaded cylinder and until the binding screw reaches its predefined tightening torque.

According to one embodiment, the detent of the threaded cylinder can be formed by a radial detent along an outer surface of the threaded cylinder. The radial detent on the outer surface of the threaded cylinder improves engagement with the abutment surface of the retention ring or clip by distributing forces radially, and thus, more evenly. This radial configuration helps prevent stress concentrations on the detent, enhancing the stability of the threaded cylinder relative to the connector body. The radial detent may extend continuously in a radial direction around the outer surface of the threaded cylinder.

According to one embodiment, an inner surface of the retention ring or clip can comprise at least one notch extending along a central longitudinal axis of the retention ring or clip. The at least one notch facilitates expansion of the retention ring when it is fitted, or of the retention clip when it is clipped, onto the threaded cylinder. The at least one notch helps prevent the retention ring or clip from breaking during installation on the threaded cylinder. In one embodiment, the inner surface of the retention ring or clip may comprises three notches spaced 120 degrees apart from each other. The 120-degree spaced notches may facilitate uniform expansion of the retention ring or clip during installation with the threaded cylinder, and further reduce unwanted stress concentration.

Alternatively or in combination, the inner surface of the retention ring or clip can comprise at least one contact rib extending along a central longitudinal axis of the retention ring or clip. The at least one contact rib of the retention ring or clip provides surface contact with the outer surface of the threaded cylinder, improving stability of retention. In one embodiment, the inner surface of the retention ring or clip may comprise three contact ribs spaced 120 degrees apart from each other. Each contact rib may be arranged between two notches of the retention ring or clip. The outer surface of the threaded cylinder may comprise at least one raised portion. The at least one raised portion may be configured to rest against the at least one contact rib of the retention ring or clip, enhancing mechanical retention between the ring or clip and the threaded cylinder, in particular by friction. The raised portion of the threaded cylinder may extend continuously in a radial direction around an outer circumference of the threaded cylinder. The raised portion may be machined directly on the threaded cylinder, forming an integral single-piece structure.

According to one embodiment, an outer surface of the retention ring or clip can comprise at least one reinforcing rib extending along a central longitudinal axis of the retention ring or clip. The at least one reinforcing rib strengthens the retention ring or clip, which may be made of plastic material. Additionally, the at least one reinforcing rib may serve as a gripping feature for the operator.

According to one embodiment, the retention ring or clip can be made of a plastic material. Manufacturing the retention ring or clip from a plastic material enables a cost-effective and easily reproducible component. The plastic material is stiff enough to provide effective retention until the predefined tightening torque of the binding screw within the threaded cylinder, while being adapted to break when this predefined tightening torque of the binding screw is reached. This allows the retention ring or clip to be removed when necessary during assembly, in particular to allow the threaded cylinder to be screwed within the threaded hole of the connector body.

According to one embodiment, the retention ring or clip can be configured to break when said predefined tightening torque of the binding screw is reached. This configuration facilitates the removal of the retention ring or clip when its retention function is no longer required, namely when the predefined tightening torque of the binding screw within the threaded cylinder is reached. The predefined tightening torque may be comprised between 5 Nm and 30 Nm, in particular between 15 Nm and 20 Nm ("Nm" for Newton-metre). The predefined tightening torque is reached when the binding screw abuts against a corresponding stop of the threaded cylinder. Once the predefined tightening torque is reached, the retention ring or clip no longer performs its retention function, allowing the threaded cylinder to rotate within the connector body and in unison with the binding screw.

According to one embodiment, the outer threaded section of the threaded cylinder can be terminated by a breakable zone. When the breakable zone breaks, only the outer threaded section of the threaded cylinder remains screwed into the threaded hole of the connector body. This prevents any portion of the threaded cylinder from protruding outside the connector body. The portion of the threaded cylinder comprising the detent becomes separable from the rest of the threaded cylinder upon breakage at the breakable zone. The breakable zone may be formed by a groove or notch, in particular where the thickness is reduced with respect to the rest of the threaded cylinder.

According to one embodiment, the wire connection assembly can further comprise at least one binding screw, wherein the at least one binding screw can be a shearable screw. The shearable screw has a shear-off head that detaches when a shear off torque is reached. This prevents any portion of the binding screw from protruding outside the connector body. Hence, the shearable binding screw prevents the accumulation of electrical charge at sharp points by eliminating protrusions that could cause edge effect. The shear off torque may range between 10 Nm to 120 Nm, in particular between 75 Nm to 100 Nm, more in particular between 78 Nm and 85 Nm. The shear off torque is greater than the predefined tightening torque of the binding screw. The shear off torque may vary according to the type and size of the binding screw.

According to one embodiment, the binding screw can have a conical tip. The conical tip is adapted to establish an electrical contact with a wire by piercing and penetrating it. The conical shape enhances the compression of the wire and improves the fastening of the wire to the connector body.

According to one embodiment, the height of the retention ring or clip along its central longitudinal axis can be configured such that, when the binding screw reaches the predefined tightening torque within the threaded cylinder, a portion of the binding screw protrudes outwardly from the retention ring or clip. This design allows maintaining the retention function of the ring or clip while limiting the necessary amount of material used for its manufacturing and retention function.

Alternatively, the height of the retention ring or clip along its central longitudinal axis can be configured such that, when the binding screw reaches the predefined tightening torque within the threaded cylinder, the wire connection assembly is characterized by the absence of any portion of the binding screw protruding outwardly from the retention ring or clip. The absence of a protruding portion of the binding screw when the binding screw reaches the predefined tightening torque within the threaded cylinder prevents further tightening of the binding screw. The operator must first remove the retention ring or clip to continue tightening the binding screw. This provides a visual and mechanical indication for proper installation. It promotes sequential tightening in wire assemblies with multiple screws. Sequential and progressive tightening is beneficial since it improves electrical contact quality, in particular compared to direct tightening of the binding screw up to abutment.

The object of the invention is also achieved by means of a method of assembling of a wire connection assembly. The wire connection assembly comprises a connector body at least partially forming a wire receiving chamber and at least one threaded hole for receiving a threaded cylinder and a binding screw, the method comprising the steps of:
a) assembling a retention ring or clip to the threaded cylinder, in particular by positive fit,
b) screwing the threaded cylinder into the threaded hole of the connector body until the retention ring or clip rests on the connector body,
c) screwing the binding screw into the threaded cylinder until a predefined tightening torque of the binding screw,
d) when the predefined tightening torque of the binding screw is reached, removing the retention ring or clip, and then
e) screwing the binding screw and the threaded cylinder in unison within the threaded hole of the connector body.

During step b), a translation, a rotation, or both, of the threaded cylinder with respect to the connector body may be blocked by the retention ring or clip. This method eliminates the need for adhesive bonding by using a retention ring or clip to temporarily secure the threaded cylinder until the predefined tightening torque of the binding screw is reached. This method provides a more reliable and repeatable assembly process for a wire connection assembly.

The binding screw and the threaded cylinder can be screwed in unison in step e) until a predefined shear-off torque is reached, causing respective shear-off portions of the binding screw and the threaded cylinder to detach.The invention will be described in more detail by way of examples hereinafter using advantageous embodiments and with reference to the accompanying drawings. The described embodiments are only possible configurations in which individual features may, however, as described above, be implemented independently of each other or may be omitted. Equal elements illustrated in the drawings are commonly provided with same reference signs.

In the drawings:
**Fig. 1** shows a perspective view of a wire connection assembly according to a first embodiment in a pre-assembled state;
**Fig. 2** shows a schematic partly cross-sectioned perspective view of the wire assembly shown in Fig. 1;
**Fig. 3** shows a schematic three dimensional view of the retention ring shown in Figs. 1 and 2;
**Fig. 4, Fig. 5****,** **Fig. 6** and **Fig. 7** show a tightening sequence of the wire connection assembly according to the first embodiment;
**Fig. 8** and **Fig. 9** show two steps of a tightening sequence of a wire connection assembly according to a second embodiment.

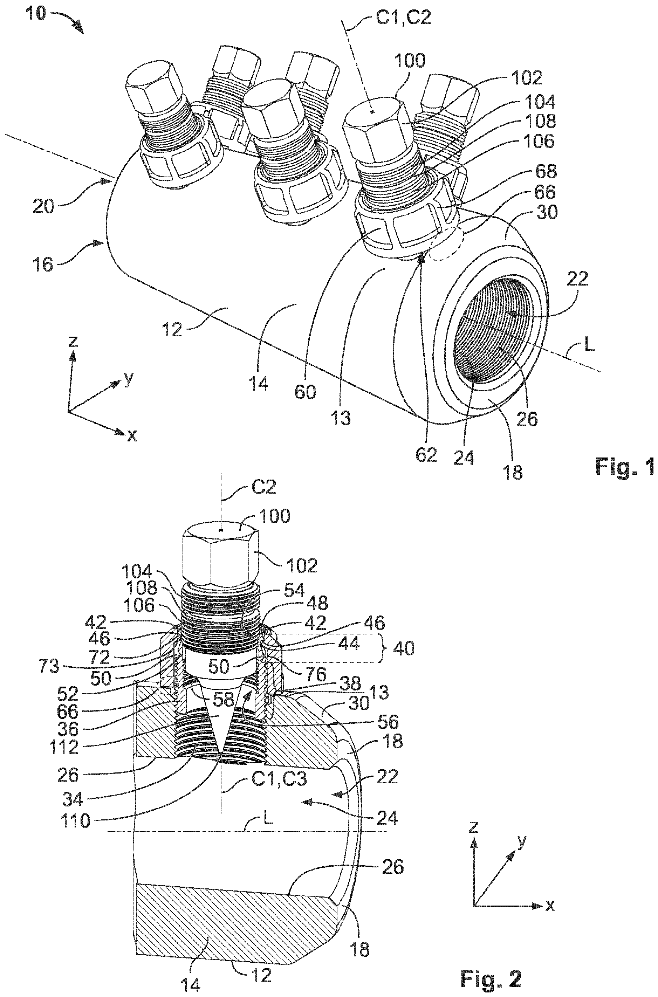

Fig. 1 illustrates a wire connection assembly 10 according to a first embodiment. The wire connection assembly 10 may be a splice connector or a lug. The wire connection assembly 10 is adapted for connecting cables (not represented), more specifically power cables or electrical cables. The wire connection assembly 10 is adapted for receiving different diameters of cables.

### Connector body

The wire connection assembly 10 comprises a connector body 12. The connector body 12 is formed by a sleeve 14 extending from a first end 16 to a second opposite end 18 along its longitudinal central axis L. The longitudinal central axis L extends along a longitudinal direction X, transverse direction Y and height direction Z, which run perpendicularly to each other and thus form a Cartesian coordinate system. Each end 16, 18 is provided with a corresponding opening 20, 22 for receiving a respective wire (not represented) along the longitudinal central axis L. The connector body 12 is at least partially forming a wire receiving chamber 24 into which a wire (not represented) can be inserted by one of the openings 20, 22. As shown in the example of fig. 1, the interior wall 26 of the wire receiving chamber 24 is threaded. The threaded interior wall 26 allows improving the surface contact between a wire (not represented) inserted in the connector body 12 and the wall 26 of the wire receiving chamber 24.

As visible in fig. 1 at the second end 18, the connector body 12 is provided with a tapered portion 30.

A wire (not represented) can be mechanically fixed to the connector body 12 by means of at least one binding screw 100. In the example of fig. 1, the wire connection assembly 10 comprises six binding screws 100. The number of binding screws is, however, not limitative. Each binding screw 100 is received in a respective threaded hole 34 (visible in Fig. 2) of the connector body 12. In the example of fig. 1, the wire connection assembly 10 comprises six threaded holes 34. The number of threaded holes is, however, not limitative either. Each threaded hole 34 has a central axis C1 that is perpendicular to the central longitudinal axis L of the connector body 12.

The wire connection assembly 10, as well as the binding screws 100, may be used for connecting any kind of wire, e.g. copper wires, aluminum wires, wires made of any kind of metal or metal alloys, etc. and are especially advantageous for use with aluminum wires. The wire connection assembly 10 and the binding screws 100 may be used for connecting different diameters of wires.

### Binding screw

The binding screw 100 extends along a central longitudinal axis C2 and comprises a head 102 designed to be driven either by a tool or manually. The binding screw 100 comprises a first threaded portion 104 and a second threaded portion 106. A breakable zone 108 is positioned between the first threaded portion 104 and the second threaded portion 106 along a central longitudinal axis C2. This breakable zone allows the binding screw 100 to shear at a predefined torque, making it a shearable screw. The head 102 of the binding screw 100 is thus shear-off head 102.

At the end 110 opposite the head 102, the binding screw 100 comprises a conical portion 112. The diameter of the conical portion 112 progressively decreases from the second threaded portion 106 towards the end 110 along the central longitudinal axis C1. The conical portion 112 of the binding screw 100 may be adapted for the desired penetration depth inside the connector body 12. The binding screw 100 may be adapted to achieve the desired contacting effect between the wire connection assembly 100 and a wire.

As Fig.1 represents a pre-assembled state of the wire connection assembly 10, the binding screws 100 are pre-assembled to the connector body 12. In particular, the binding screws 100 are pre-assembled to the connector body 12 by means of a respective threaded cylinder 36 that is visible in the cross-sectional view of fig. 2.

### Threaded cylinder

As shown in Fig. 2, the threaded cylinder 36 has an outer threaded section 38 adapted to engage a corresponding threaded hole 34 of the connector body 12. The threaded cylinder 36 further comprises an outer retention section 40. The outer retention section 40 extends between the outer threaded section 38 and a free end 48 of the threaded cylinder 36 along its central longitudinal axis. The outer retention section 40 is provided with a detent 42. In the example of the first embodiment, the detent 42 is formed by a radial detent 42 along an outer surface 44 of the threaded cylinder 36. In particular, the radial detent 42 extends continuously in a radial direction around the outer surface 44 of the threaded cylinder 36. The detent 42 is formed at the free end 48 of the threaded cylinder 36. In a plane (XZ), as shown in Fig. 2, the detent 42 has substantially the shape of a triangular detent. The detent 42 of the threaded cylinder 36 defines an engagement surface 46. The engagement surface 46 extends in the plane (XY), as shown in Fig. 2. The engagement surface 46 is thus substantially planar. The engagement surface 46 is substantially flat.

The outer retention section 40 of the threaded cylinder 36 further comprises a raised portion 50. The raised portion 50 extends continuously in a radial direction around the outer surface 44 of the threaded cylinder 36.

The threaded cylinder 36 comprises a breakable zone 52. The breakable zone 52 terminated the outer threaded section 38. More precisely, the breakable zone 52 is provided between the outer threaded section 38 and the outer retention section 40. Hence, the outer retention section 40 comprising the detent 42 is separable from the rest of the threaded cylinder 36 upon breakage at the breakable zone 52. The threaded cylinder 36 is machined from a metallic material.

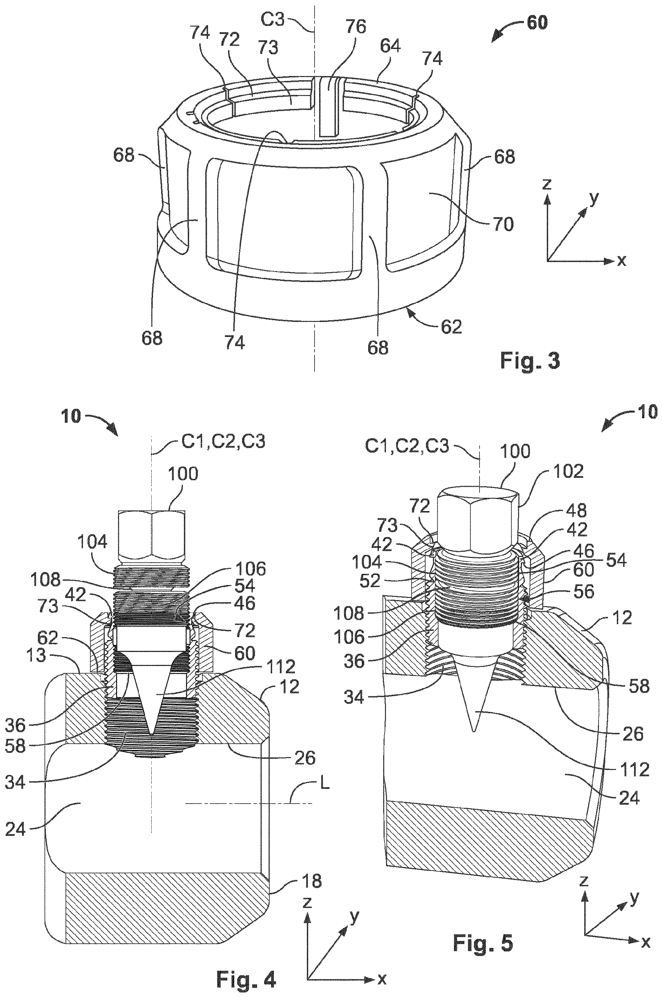

In its interior, the threaded cylinder 36 comprises a first inner threaded section 54 and a second inner threaded section 56 along its central longitudinal axis. The first inner threaded section 54 is provided on the inside of the outer retention section 40. The first inner threaded section 54 is configured to engage the binding screw 100 by screwing during the pre-assembled state of the wire connection assembly 10, as shown in Fig. 2. The second inner threaded section 56 is configured to fully engage with the binding screw 100 as it advances, ultimately stopping at a stop 58 of the second inner threaded section 56 (visible in Fig. 2). In particular, the second threaded portion 106 of the binding screw 100 is configured to first engage with the first inner threaded section 54 of the threaded cylinder 36 (as in Figs. 2 and 4), and then, upon tightening, to engage with the second inner threaded section 56 of the threaded cylinder 36 stopping at a stop 58 of the second inner threaded section 56 (as in Figs. 5, 6 and 7). In an assembled state of the wire connection assembly 10, the binding screw 100 abuts against the stop 58.

### Retention ring

During assembly, the binding screw 100 must first be fully threaded into the threaded cylinder 36, i.e. until the stop 58. Once the binding screw 100 abuts against the stop 58 of the corresponding threaded cylinder 36, the threaded cylinder 36 and the binding screw 100 can be tightened together to the connector body 12. To prevent the threaded cylinder 36 from rotating and/or advancing while the binding screw 100 is being inserted and until the binding screw 100 reaches its stop 58, the wire connection assembly 10 comprises a retention ring 60.

In another embodiment, not represented, the retention ring 60 may be instead a retention clip, such as an open retention ring, and performing the same function than the retention ring 60.

A retention ring 60 according to the first embodiment is shown in the perspective view of Fig. 3. The retention ring 60 is also visible in the assembly views of Figs. 1 and 2.

The retention ring 60 is made of a plastic material, in particular by plastic injecting molding.

The retention ring 60 extends between a first end 62 and a second end 64 along its central longitudinal axis C3. In the first embodiment, the second end 64 of the retention ring 60 is tapered towards the central longitudinal axis C3. The first end 62 of the retention ring 60 is configured to lie on an outer wall 13 of the connector body 12, as shown in Figs. 1 and 2. The first end 62 has a larger end surface than the second end 64. The larger surface at the first end 62 allows increasing the surface contact area between the retention ring 60 and the outer wall 13 of the connector body 12. An increased contact area enhances the mechanical stability of the retention ring 60 on the connector body 12. The circle 66 in Figs. 1 and 2 highlight this surface contact area.

The retention ring 60 comprises reinforcing ribs 68 on the external wall 70 of the retention ring 60. In the first embodiment, the reinforcing ribs 68 are spaced at equal distances from each other. The reinforcing ribs 68 strengthen the retention ring 60 and prevent unwanted breakage. These reinforcing ribs 68 may also serve as a gripping means, enabling an operator to manipulate the retention ring 60 more easily.

Turning to the inside of the retention ring 60, Figures 2 and 3 show an abutment surface 72 extending in a plane perpendicular to the central longitudinal axis C3. The abutment surface 72 projects radially toward the central longitudinal axis C3 around the inner circumference of the retention ring 60. The abutment surface 72 is defined by an inwardly projecting shoulder 73.

Notches 74, in particular three notches 74, are carved into the projecting shoulder 73, thereby interrupting the abutment surface 72. The three notches 74 are spaced 120 degrees apart. The notches 74 facilitates expansion of the retention ring 60 when it is fitted onto the threaded cylinder 36.

The inside of the retention ring 60 is further provided with contact ribs 76 extending along a central longitudinal axis C3. In the first embodiment, the retention ring 60 comprises three contact ribs 76 spaced 120 degrees apart from each other. Each contact rib 76 is arranged between two notches 74 (Fig. 3). As shown in Fig. 2, the contact ribs 76 are configured to be in contact surface with the raised portion 50 of the threaded cylinder 36 in the pre-assembled state. This surface contact increases friction and enhances mechanical retention of the retention ring 60 during the pre-assembled state of the wire connection assembly 10.

The number of notches 74 and contact ribs 76 is not limiting. In some embodiments, the retention ring 60 may be characterized by the absence of notches and/or contact ribs.

As shown in Fig. 2, the abutment surface 72 of the retention ring 60 provides a stop for the engagement surface 46 of the detent 42 of the threaded cylinder 36 along the central longitudinal axis C3 during the pre-assembled state.

In the pre-assembled state illustrated by Fig. 2, a translation of the retention ring 60 along the central longitudinal axis C3 is prevented. In the pre-assembled state, the retention ring 60 is blocked in translation between the outer wall 13 of the connector body 12 and the engagement surface 46 of the detent 42 of the threaded cylinder 36.

Moreover, in the pre-assembled state illustrated by Fig. 2, a rotation of the threaded cylinder 36 around the central longitudinal axis C3 is prevented by the retention ring 60. The use of glue or adhesive is therefore rendered unnecessary.

### Assembly sequences

Figs. 4 to 7 show a tightening sequence of the wire connection assembly 10 according to the first embodiment.

Fig. 4 illustrates the pre-assembled state of the wire connection assembly 10. The cross-sectional view presented in Fig.4 is defined in a different plane compared to the one shown in Fig. 2. In the cross-sectional view of Fig. 4, the contact rib 76 of the retention ring 60 (shown in Figs. 2 and 3) is not visible.

In the pre-assembled state, the retention ring 60 is assembled to the threaded cylinder 36, in particular by positive fit. It has the advantage that it does not require the use of any tools. The threaded cylinder 36 is screwed into the threaded hole 34 of the connector body 12 until the first end 62 of the retention ring 60 abuts against the outer wall 13 of the connector body 12. An abutment occurs between the abutment surface 72 of the retention ring 60 and the engagement surface 46 of the detent 42 of the threaded cylinder 36 along the central longitudinal axis C3. As a result, in the pre-assembled state, a translation of the retention ring 60 along the central longitudinal axis C3 in either direction is prevented. More specifically, the retention ring 60 is blocked in translation between the outer wall 13 of the connector body 12 and the detent 42 of the threaded cylinder 36.

In the pre-assembled state, the binding screw 100 is pre-tightened to the threaded cylinder 36. More precisely, the second threaded portion 106 of the binding screw 100 is partially engaged with the first inner threaded section 54 of the threaded cylinder 36. This pre-tightening secures the binding screw 100 to the threaded cylinder 36. It allows preventing accidental loosening before reaching the final assembled state. In the pre-assembled state, the conical portion 112 of the binding screw 100 is positioned within the threaded hole 34 of the connector body 12 and does not yet extend into the wire receiving chamber 24 of the connector body 12.

In the pre-assembled state, the retention ring 60 is engaged with the threaded cylinder 36 in such a way that it allows the binding screw 100 to be screwed into the threaded cylinder 36 while simultaneously preventing translation of the threaded cylinder 36 in the threaded hole 34 of the connector body 12. In particular, the retention ring 60 may prevent both the rotational and axial movement of the threaded hole 34 in the pre-assembled state. This blockage of the threaded cylinder 36 remains effective until a predefined tightening torque of the binding screw 100 within the threaded cylinder 36 is achieved.

Fig. 5 illustrates an intermediate pre-assembled state of the wire connection assembly 10. Between the states illustrated in Fig. 4 and Fig. 5, the binding screw 100 has been tightened until it reaches said predefined tightening torque. This predefined tightening torque is determined by the torque required for the binding screw 100 to abut against the stop 58 of the threaded cylinder 36. In the intermediate pre-assembled state, the binding screw 100 is fully tightened to the threaded cylinder 36. The first threaded portion 104 of the binding screw 100 is engaged with the first inner threaded section 54 of the threaded cylinder 36, while the second threaded portion 106 of the binding screw 100 is engaged with the second inner threaded section 56 of the threaded cylinder 36. In the intermediate pre-assembled state, the breakable zone 52 of the threaded cylinder 36 is aligned with the breakable zone 108 of the binding screw 100, meaning both breakable zones 52, 108 lie in the same plane, specifically the (XY) plane.

In the intermediate pre-assembled state, the head 102 of the binding screw 100 protrudes from the threaded cylinder 36, in particular from the end surface 48 of the threaded cylinder 36. In the pre-assembled state, the conical portion 112 of the binding screw 100 is partially positioned within the wire receiving chamber 24 of the connector body 12.

The predefined tightening torque of the binding screw 100 within the threaded cylinder 36 has caused the disengagement of the detent 42 of the threaded cylinder 36 from the shoulder 73 of the retention ring 60. This step may require a torque in the range of 5 to 30 Nm. In the intermediate pre-assembled state, the abutment surface 72 of the retention ring 60 is no longer in contact with the engagement surface 46 of the threaded cylinder 36. The threaded cylinder 36 has thus disengaged from the retention ring 60. This disengagement allows the removal of the retention ring 60. Reaching the predefined tightening torque of the binding screw 100 inside the threaded cylinder 36 may cause the retention ring 60 to break. In any case, the retention ring 60 can be removed, for instance, unclipped from the threaded cylinder 36 in the intermediate pre-assembled state. The removal of the retention ring 60 can be done manually. For example, an operator may grasp the retention ring 60 by the reinforcing ribs 68 for removal.

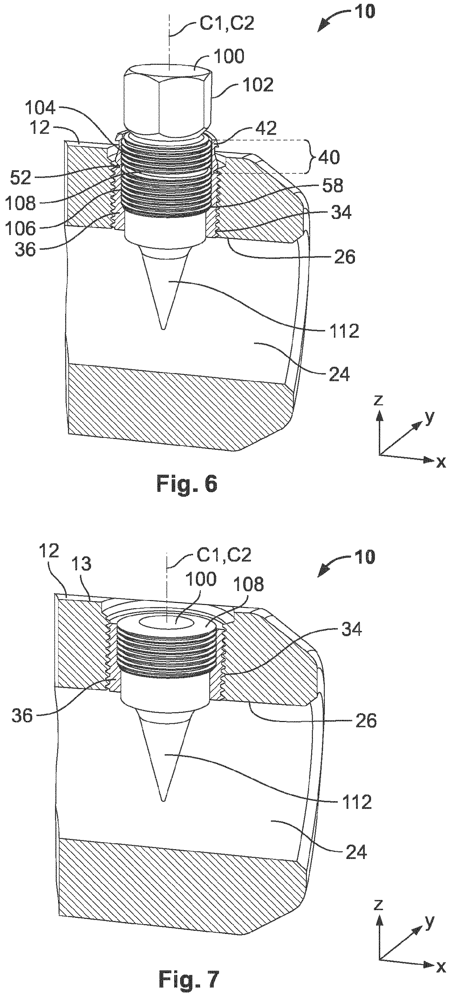

Fig. 6 illustrates an assembled state of the wire connection assembly 10. Between the states illustrated in Fig. 5 and Fig. 6, the threaded cylinder 36 and the bending screw 100 have been rotated in unison. The threaded cylinder 36 and the bending screw 100 have been rotated in unison by applying a torque applied to the head 102 of the bending screw 100. In the assembled state, the threaded cylinder 36 has been fully engaged with the threaded hole 34. Inside the wire receiving chamber 24, the threaded cylinder 36 flush with the interior wall 26 of the connector body 12.

In the assembled state, the head 102 and the first threaded portion 104 of the binding screw 100, as well as the outer retention section 40 of the threaded cylinder 36 protrudes externally from the connector body 12.

As in the final assembled state shown in Fig. 7, in the assembled state of Fig. 6, the conical portion 112 of the binding screw 100 is fully inserted into the wire receiving chamber 24 of the connector body 12, allowing it to penetrate and compress a wire (not represented) received therein.

Fig. 7 illustrates the final assembled state of the wire connection assembly 10. Between the states shown in Fig. 6 and Fig. 7, a predefined shear off torque has been reached, causing the bending screw 100 and the threaded cylinder 36 to break at their respective breaking zones 52 and 108. As a result, as shown in Figure 7, no part of the threaded cylinder 36 or the binding screw 100 protrudes beyond the outer wall 13 of the connector body 12, in particular because the outer retention section 40 of the threaded cylinder 36, as well as the head 102 and the first threaded portion 104 of the binding screw 100, have been sheared off.

The predefined shear off torque may range between 10 Nm to 120 Nm, in particular between 75 Nm and 100 Nm, more in particular the predefined shear off torque is approximately 80 Nm. The predefined shear off torque may be greater, in particular at least twice greater, than the predefined tightening torque of the binding screw 100 in the threaded cylinder 36. The predefined tightening torque of the binding screw 100 may range between 5 Nm and 30 Nm.

The method for tightening the wire connection assembly 10 is primarily carried out in two main steps. The first main step comprises rotating the binding screw 100 within the threaded cylinder 36, which is held in a fixedly held relative to the connector body 12 by means of the retention ring 60. Once the predefined tightening torque of the binding screw 100 is reached, namely when the binding screw 100 reaches the stop 58 inside the threaded cylinder 36, the second main step begins. This second main step consists of moving the binding screw 100 and the threaded cylinder 36 in unison until the threaded cylinder 36 reaches its stop inside the threaded hole 34 of the connector body 12.

If the binding screw 100 is a shear screw, as in the first embodiment, the shearing of the head 102 and the retention portion 40 of the threaded cylinder 36 occurs, leading to the final assembled state shown in Fig. 7.

### Other embodiment

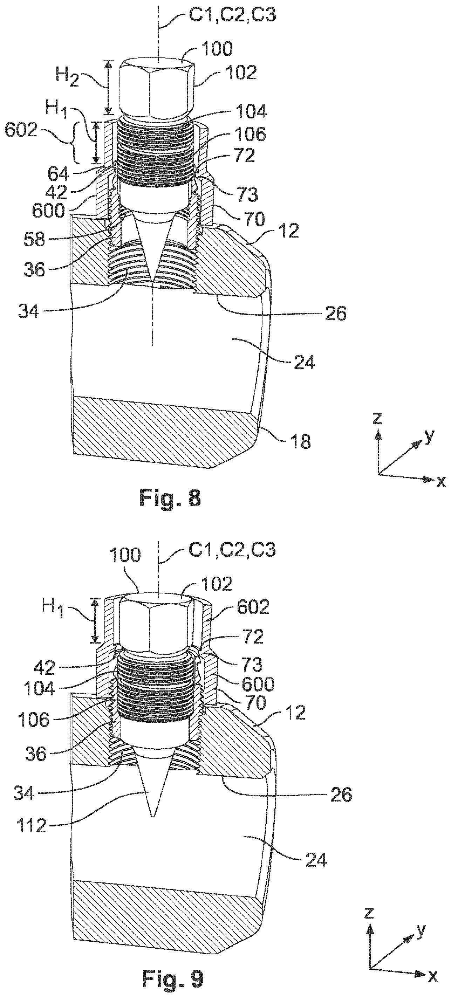

A retention ring 600 according to a second embodiment is illustrated in Figs. 8 and 9. Fig. 8 represents the pre-assembled state, as shown in Fig. 4 for the first embodiment, while Fig. 9 represents the intermediate pre-assembled state, as shown in Fig. 5 for the first embodiment. The primary difference between the retention ring 60 of the first embodiment and the retention ring 600 of the second embodiment is that the retention ring 600 is provided with an extended portion 602 along its central longitudinal axis C3. The extended portion 602 has a height H1 and extends from the location corresponding to the second end 64 of the external wall 70 of the retention ring 60. The height H1 of the extended portion 602 is substantially equal to the height H2 of the head 102 of the binding screw 100, measured along the Z-axis.

Similar to the retention ring 60, the retention ring 600 comprises an inwardly projecting shoulder 73 that forms the abutment surface 72 for the detent 42 of the threaded cylinder 36. In particular, the inwardly projecting shoulder 73 may be positioned equidistant from each free end of the retention ring 600 along the central longitudinal axis C3.

In the pre-assembled state, as shown in fig. 8, the detent 42 of the threaded cylinder 36 engages with the projecting shoulder 73 of the retention ring 600, while the extended portion 602 of the retention ring 600 partially surrounds the binding screw 100, leaving only the head 102 of the binding screw 100 exposed outwardly.

When torque is applied to the head 102, either manually or using a tool, until the predefined tightening torque of the binding screw 100 is reached, specifically the intermediate pre-assembled state shown in Figure 9, the head 102 of the binding screw 100 becomes enclosed within the extended portion 602 of the retention ring 600. In other words, the height H1 of the extended portion 102 of the retention ring 600 along its central longitudinal axis C3 is configured such that, when the binding screw 100 reaches the predefined tightening torque within the threaded cylinder 36, the wire connection assembly 10 is characterized by the absence of any portion of the binding screw 100 protruding outwardly from the retention ring 600. Consequently, when the head 102 of the binding screw 100 is fully covered by the retention ring 600, the driving tool will lose grip on the retention ring 600, disengaging. Thereby, it forces the operator to pause the assembly sequence, preventing the binding screw 100 from being fully tightened in a single operation.

All previously discussed embodiments are not intended as limitations but serve as examples illustrating features and advantages of the invention. It is to be understood that some or all of the above described features can also be combined in different ways.

### Reference signs

10: wire connection assembly
12: connector body
13: outer wall of the connector body
14: sleeve of the connector body
16: first end of the connector body
18: second opposite end of the connector body
20: first opening of the connector body
22: second opening of the connector body
24: wire receiving chamber of the connector body
26: interior wall (threaded wall) of the connector body
30: tapered portion of the connector body
34: threaded hole of the connector body
36: threaded cylinder
38: outer threaded section of the threaded cylinder
40: outer retention section of the threaded cylinder
42: detent of the threaded cylinder
44: outer surface of the threaded cylinder
46: engagement surface of the threaded cylinder
48: free end of the threaded cylinder
50: raised portion of the threaded cylinder
52: breakable zone of the threaded cylinder
54: first inner threaded section of the threaded cylinder
56: second inner threaded section of the threaded cylinder
58: stop of the threaded cylinder
60, 600: retention ring
62: first end of the retention ring
64: second end of the retention ring
66: surface contact area (visible Figs. 1 and 2)
68: reinforcing ribs of the retention ring
70: external wall of the retention ring
72: abutment surface of the retention ring
73: inwardly projecting shoulder of the retention ring
74: notches of the retention ring
76: contact ribs of the retention ring
100: binding screw
102: head of the binding screw
104: first threaded portion of the binding screw
106: second threaded portion of the binding screw
108: breakable zone of the binding screw
110: end of the binding screw
112: conical portion of the binding screw
600: retention ring
602: extended portion
C1, C2, C3: central longitudinal axis
H1, H2: height
L: longitudinal axis of the connector body
X: longitudinal direction
Y: transverse direction
Z: height direction

## Claims

1. A wire connection assembly (10), such as a splice connector or lug, in particular for connecting power cables or electrical cables, the wire connection assembly (10) comprising:
a connector body (12) at least partially forming a wire receiving chamber (24) and comprising at least one threaded hole (34) for receiving a binding screw (100),
a threaded cylinder (36),
the threaded cylinder (36) having an outer threaded section (38) adapted to engage the at least one threaded hole (34) of the connector body (12) and an inner threaded section (54, 56) adapted to engage the binding screw (100),
**characterized in that**
the wire connection assembly (10) further comprises a retention ring (60, 600) or clip distinct from the threaded cylinder (36) and the binding screw (100),
the retention ring (60, 600) or clip is engageable with the threaded cylinder (36) so as to allow the binding screw (100) to be screwed into the threaded cylinder (36) while blocking a translation of the threaded cylinder (36) in the at least one threaded hole (34) of the connector body (12) until a predefined tightening torque of the binding screw (100) within the threaded cylinder (36).

2. The wire connection assembly (10) according to claim 1, wherein the threaded cylinder (36) comprises a detent (42), and the retention ring (60, 600) or clip has an abutment surface (72) adapted to abut against the detent (42) of the threaded cylinder (36) along a central longitudinal axis of the threaded cylinder (36).

3. The wire connection assembly (10) according to claim 2, wherein the detent (42) of the threaded cylinder (36) is formed by a radial detent (42) along an outer surface (44) of the threaded cylinder (36).

4. The wire connection assembly (10) according to any of the preceding claims, wherein an inner surface of the retention ring (60, 600) or clip comprises at least one notch (74) extending along a central longitudinal axis (C3) of the retention ring (60, 600) or clip.

5. The wire connection assembly (10) according to any of the preceding claims, wherein an inner surface of the retention ring (60, 600) or clip comprises at least one contact rib (76) extending along a central longitudinal axis (C3) of the retention ring (60, 600) or clip.

6. The wire connection assembly (10) according to any of the preceding claims, wherein an outer surface (70) of the retention ring (60, 600) or clip comprises at least one reinforcing rib (68) extending along a central longitudinal axis (C3) of the retention ring (60, 600) or clip.

7. The wire connection assembly (10) according to any of the preceding claims, wherein the retention ring (60, 600) or clip is made of a plastic material.

8. The wire connection assembly (10) according to any of the preceding claims, wherein the retention ring (60, 600) or clip is configured to break when said predefined tightening torque of the binding screw (100) is reached.

9. The wire connection assembly (10) according to any of the preceding claims, wherein the outer threaded section (38) of the threaded cylinder (36) is terminated by a breakable zone (52).

10. The wire connection assembly (10) according to any of the preceding claims, further comprising at least one binding screw (100), wherein the at least one binding screw (100) is a shearable screw.

11. The wire connection assembly (10) according to the preceding claim, wherein the binding screw (100) has a conical tip (112).

12. The wire connection assembly (10) according to any of the preceding claims, wherein the height of the retention ring (60) or clip along its central longitudinal axis (C3) is configured such that, when the binding screw (100) reaches the predefined tightening torque within the threaded cylinder (36), a portion (102, 104) of the binding screw (100) protrudes outwardly from the retention ring (60) or clip.

13. The wire connection assembly (10) according to any one of claims 1 to 11, wherein the height of the retention ring (600) or clip along its central longitudinal axis (C3) is configured such that, when the binding screw (100) reaches the predefined tightening torque within the threaded cylinder (36), the wire connection assembly (10) is **characterized by** the absence of any portion of the binding screw (100) protruding outwardly from the retention ring (600) or clip.

14. A method of assembling of a wire connection assembly (10), where the wire connection assembly comprises (10) a connector body (12) at least partially forming a wire receiving chamber (24) and at least one threaded hole (34) for receiving a threaded cylinder (36) and a binding screw (100), the method comprising the steps of:
a) assembling, in particular by positive fit, a retention ring (60, 600) or clip to the threaded cylinder (36),
b) screwing the threaded cylinder (36) into the threaded hole (34) of the connector body (12) until the retention ring (60, 600) or clip rests on the connector body (12),
c) screwing the binding screw (100) into the threaded cylinder (36) until a predefined tightening torque of the binding screw (100),
d) when the predefined tightening torque of the binding screw (100) is reached, removing the retention ring (60, 600) or clip, and then
e) screwing the binding screw (100) and the threaded cylinder (36) in unison within the threaded hole (34) of the connector body (12).

15. The method of claim 14, wherein the binding screw (100) and the threaded cylinder (36) are screwed in unison in step e) until a predefined shear-off torque is reached, causing respective shear-off portions (102, 104, 40) of the binding screw (100) and the threaded cylinder (36) to detach.
